# EUROPEAN PATENT SPECIFICATION

(11) **EP 4 389 470 B1**
(45) Date of publication and mention of the grant of the patent: **09.07.2025**
(21) Application number: 23217527.3
(22) Date of filing: 18.12.2023
(51) Int. Cl.: B60C 25/05

(54) **MACHINE FOR THE INSERTION/REMOVAL OF TOROIDS INTO/FROM WHEELS OF SPECIAL VEHICLES**
MASCHINE ZUM EINSETZEN/ENTFERNEN VON TOROIDEN IN/VON RÄDERN VON SPEZIALFAHRZEUGEN
MACHINE POUR L'INSERTION/LE RETRAIT DE TORES DANS/DES ROUES DE VÉHICULES SPÉCIAUX

(30) Priority: 23.12.2022 IT 202200026691
(43) Date of publication of application: 26.06.2024
(73) Proprietor: Giuliano Group S.p.A., 42015 Correggio (RE) (IT)
(72) Inventor: VIGNOLI, Giuliano, 42015 Correggio (RE) (IT)
(74) Representative: Grana, Daniele

(56) References cited:
- EP-A1- 1 354 730
- US-A- 1 535 382
- US-A- 4 251 906
- US-A1- 2007 256 794

## Description

### Technical Field

The present invention relates to a machine for the insertion/removal of toroids into/from wheels of special vehicles, particularly of the military vehicle type.

### Background Art

As is well known, the toroid is a specific supporting body that, when installed inside the wheels of special vehicles, allows the latter to move even with flat and/or punctured tires and thus to reach the nearest workshop, skipping a possible dangerous situation.

**In** this regard, it is well known that both the installation and the removal of the toroid into/from the wheels of special vehicles are operations marked by high executive complexity and particularly long work timelines.

This fact is not surprising when one considers that the wheels of special vehicles have quite considerable size and stiffness, which in practice result in major obstacles against the performance of the aforementioned operations.

What's more, it should be kept in mind that, typically, the insertion/removal of the toroid into/from the tire is carried out completely manually, e.g. by the passengers of the special vehicles themselves, and through the use of tools of rather rudimentary construction.

It is evident to appreciate that such a working methodology, in addition to exacerbating the drawbacks discussed above, also poses a serious risk to the integrity of the wheel onto/from which the toroid is to be installed/removed, as well as to the safety of the users of such unsuitable tools.

In this regard, in order to fix at least part of the aforementioned drawbacks, machines are known which are specially designed to install/remove the toroid into/from the wheel.

These machines, differing from each other in structure and construction, share the common feature of having one or more tire gripping spindles, configured to block the tire in place, and a toroid insertion/removal assembly into/from the tire itself. In addition, the aforementioned machines also comprise deformation means of the toroid, e.g., of the type of hydraulic actuators, which are inserted by one or more operators inside the toroid itself for the purpose of giving the latter an elongated-ellipsoidal conformation that facilitates the insertion and removal thereof.

So, in order to remove the toroid from the wheel, the operators disassemble the tire from the rim and clamp the tire by means of the gripping spindles.

Having done so, once the deformation means have been inserted into the toroid, the insertion/removal assembly grabs the latter and, tugging it vigorously, pulls it repeatedly to itself; in this way, the toroid progressively comes out of the tire and is, finally, extracted from the same.

Similarly, to reinsert the toroid within the tire, the operators clamp the latter with the gripping spindles and place the deformation means inside them so that the toroid can be inserted inside the tire in the longitudinal direction.

At this point, the insertion/removal assembly is operated to grasp the tire, dilate the central hole thereof and forcefully push the toroid within the latter, gradually introducing it into the tire.

As the toroid is made to enter the tire, the insertion/removal assembly rotates the toroid itself with respect to the longitudinal insertion position, specifically arranging the outer surface thereof in contact with the inner perimeter of the tire. It is evident to appreciate, at this point, how the use of the aforementioned machines may be flawed by major drawbacks that concern, first and foremost, their crude and inaccurate methodology of operation.

In fact, such well-known machines require numerous and complex manual interventions by the operators in order to remove/insert the toroid, with the risk of causing injuries to the latter (e.g., crushing their hands) and even endangering their own safety in case of sudden movements of the toroid or unexpected situations.

In this regard, it is worth reflecting on the fact that the force required to pull the toroid often results in the toroid being ejected out of the tire at the moment of its removal, with obvious and very high danger to workers in the vicinity.

This possibility turns out to be so frequent in practice that many purchasers of such well-known machines are forced to install protective barriers around the machine itself, thus greatly increasing the overall expense and dimensions.

Due to the lack of precision and repeatability of this procedure, moreover, workers must continuously and meticulously supervise the machine during its use, scrupulously checking its proper operation and proceeding with extreme caution during the entire insertion/removal process of the toroid.

These circumstances result, therefore, in the operations of removal/insertion of the toroid from/into the tire being quite time-consuming, thus ending up severely penalizing business production output.

Not least, such machines are not always able to insert/remove the toroid into/from the tire efficiently, often ending up damaging the latter, sometimes irreparably, in this attempt.

In sum, from what has been said so far it is easy to infer that known machines are flawed by problems quite similar to those that distinguish manual removal/insertion and that, therefore, even the latter do not allow any remedy for the drawbacks of the prior art previously complained of.

Document US 4 251 906 A discloses a method and an apparatus for fitting and removing a so-called unpuncturable inner tube with respect to a corresponding pneumatic tire. This document is showing the features of the preamble of claim 1.

Document EP 1 354 730 A1 discloses a method of, and apparatus for, fitting a resilient ring substantially circular in shape into a tire, and removing it therefrom. Document US 1 535 382 A discloses a device for removing from tire casing the fluid pressure bags on which they have been vulcanized.

Document US 2007/256794 A1 discloses a method for extracting a foam support ring from a tire.

### Description of the Invention

The main aim of the present invention is to devise a machine for the insertion/removal of toroids into/from wheels of special vehicles that is safe to use and does not require the direct intervention of workers to carry out the insertion/removal of the toroid into/from the wheels.

One object of the present invention is to devise a machine for the insertion/removal of toroids into/from wheels of special vehicles which allows the toroid to be removed/inserted from/into the wheel of a military vehicle in a precise, repeatable manner and in less time than the prior art mentioned above. Another object of the present invention is to devise a machine for the insertion/removal of toroids into/from wheels of special vehicles that does not involve excessive stress on the tire and on the toroid during its own use.

Another object of the present invention is to devise a machine for the insertion/removal of toroids into/from wheels of special vehicles which can overcome the aforementioned drawbacks of the prior art within the framework of a simple, rational, easy and effective to use as well as affordable solution.

The aforementioned objects are achieved by this machine for the insertion/removal of toroids into/from wheels of special vehicles having the characteristics of claim 1.

### Brief Description of the Drawings

Other characteristics and advantages of the present invention will become more apparent from the description of a preferred, but not exclusive, embodiment of a machine for the insertion/removal of toroids into/from wheels of special vehicles, illustrated by way of an indicative, yet non-limiting example, in the accompanying tables of drawings in which:
Figure 1 is an axonometric, overall view of the machine according to the invention;
Figures 2 through 8 show, in sequence, the removal of the toroid from the reinforced tire by the insertion/removal assembly;
Figures 9 to 14 shown, in sequence, the insertion of the toroid into the reinforced tire by the insertion/removal assembly.

### Embodiments of the Invention

With particular reference to these figures, reference numeral 1 globally denotes a machine for the insertion/removal of toroids into/from wheels of special vehicles. The machine 1 for the insertion/removal of toroids into/from wheels of special vehicles comprises, first of all, at least one base frame 2 for resting on the ground and gripping and retaining means 3 of a reinforced tire P associated with the base frame 2.

In this regard, it is specified that, in the context of this disclosure, "reinforced tire" means a tire specifically constructed to contain within it a supporting toroid such as, e.g., a military vehicle tire.

In other words, "reinforced tire" refers to any tire internally provided with a toroid or in which a toroid can be installed.

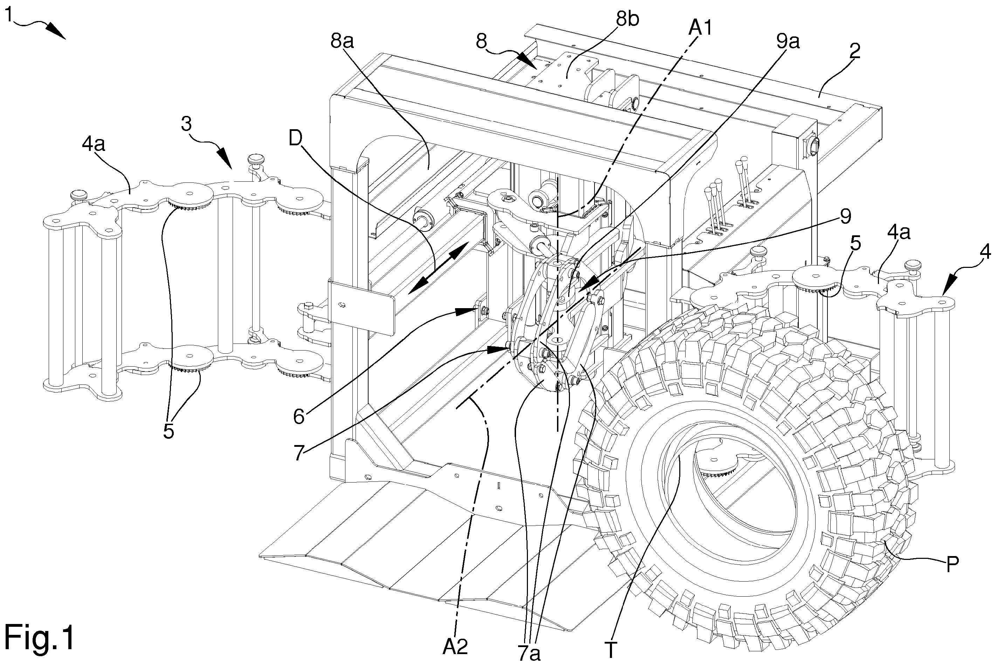

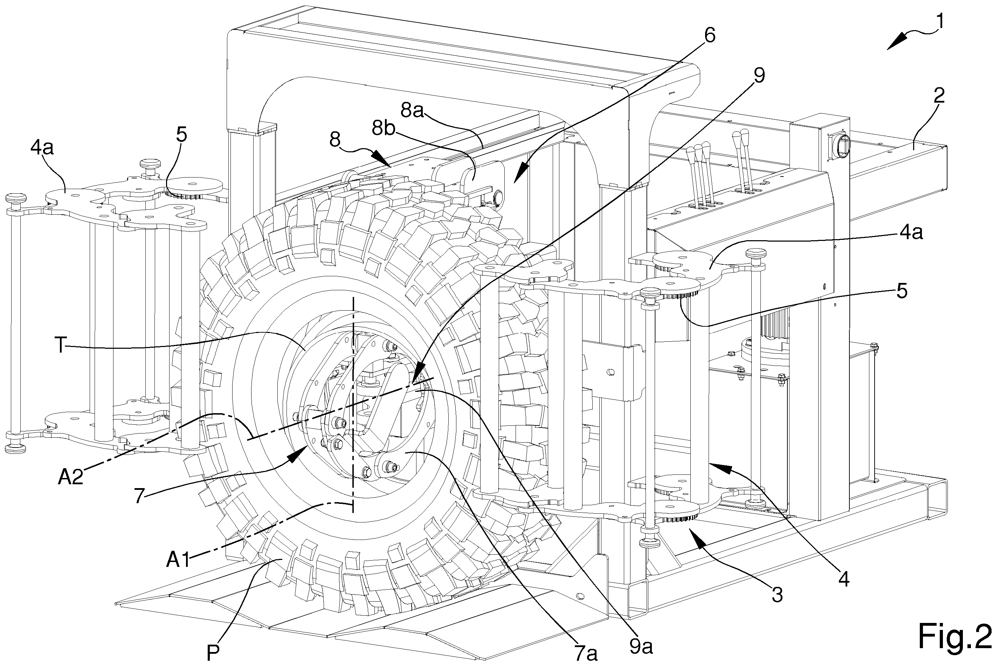

That being said, the gripping and retaining means 3 comprise at least one gripping and retaining structure 4 movable between a retaining configuration of the reinforced tire P (Figures 2-14) and a release configuration of the reinforced tire P (Figure 1).

As visible in Figure 1, the gripping and retaining structure 4 preferably comprises at least one pair of gripping and retaining members 4a associated with the base frame 2 and movable close to/away from each other at the transition from the release/retaining configuration to the retaining/release configuration.

In particular, the gripping and retaining members 4a are associated with the base frame 2 in a rotatable manner, so they are rotated in a first way to be displaced from the release configuration to the retaining configuration and in a second way, opposite the previous one, to be displaced from the retaining configuration to the release configuration.

To fasten the reinforced tire P, it is, therefore, sufficient to arrange the gripping and retaining members 4a in the release position, place the reinforced tire P between them and move, at this point, the gripping and retaining members themselves from the release position to the retaining position.

In order to prevent an unexpected release of the reinforced tire P during the operation of the machine 1, the gripping and retaining means 3 comprise at least one blocking mechanism 5 associated with the gripping and retaining structure 4 and adapted to block the latter in the retaining configuration, thus preventing the transition thereof to the release configuration.

In particular, the blocking mechanism 5 can be selectively activated and deactivated.

In this way, it is possible to allow blocking the gripping and retaining structure 4 in the retaining configuration and the free movement of the gripping and retaining structure 4 between the retaining configuration and the release configuration, respectively.

Preferably, the blocking mechanism 5 is of the type of a cogwheel ratchet gear.

So, in order to remove the reinforced tire P from the gripping and retaining means 3, it is sufficient to deactivate the blocking mechanism 5, arrange the gripping and retaining members 4a from the retaining position to the release position and move, at this point, the reinforced tire P away from the machine 1.

In addition, the machine 1 comprises at least one insertion/removal assembly 6 of a toroid T into/from the reinforced tire P.

According to the invention, the insertion/removal assembly 6 comprises deformation means 7 of the toroid T and close/away movement means 8 of the deformation means 7 for moving them close to/away from the gripping and retaining means 3 along a direction of close/away movement D.

Specifically, the deformation means 7 are extendable/compressible along a first vertical axis A1 and a second horizontal axis A2 between a configuration of vertical extension, wherein they are elongated along the first axis A1, an intermediate configuration, wherein they have a substantially circular conformation, and a configuration of horizontal extension wherein they are elongated along the second axis A2.

Specifically, the deformation means 7 have a substantially ellipsoidal conformation in the configuration of vertical extension and in the configuration of horizontal extension; in the former case, the major axis is aligned with the first axis A1, while in the latter case it is aligned with the second axis A2.

In this regard, the use of the expression "extendable/retractable" is intended to refer to the fact that:
- when the deformation means 7 are extended along the first axis A1 they are simultaneously contracted along the second axis A2; and that
- when the deformation means 7 are extended along the second axis A2 they are simultaneously contracted along the first axis A1.

In other words, the extension of the deformation means 7 along one of either the first axis A1 or the second axis A2 involves, at the same time, the compression of the deformation means 7 along the other of either the first axis A1 or the second axis A2.

The deformation means 7 are, in addition, rotatable around the first axis A1 between an aligned position, wherein the second axis A2 is substantially parallel to the direction of close/away movement D, and a transverse position, wherein the second axis A2 is substantially perpendicular to the direction of close/away movement D.

This means that the deformation means 7 are rotatable substantially by 90° around the first axis A1.

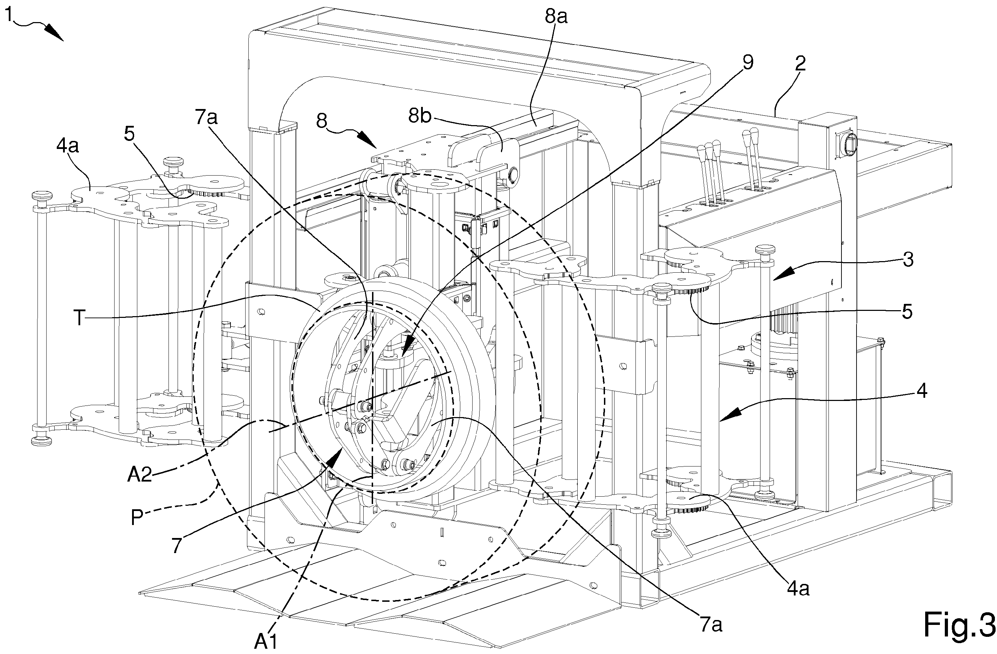

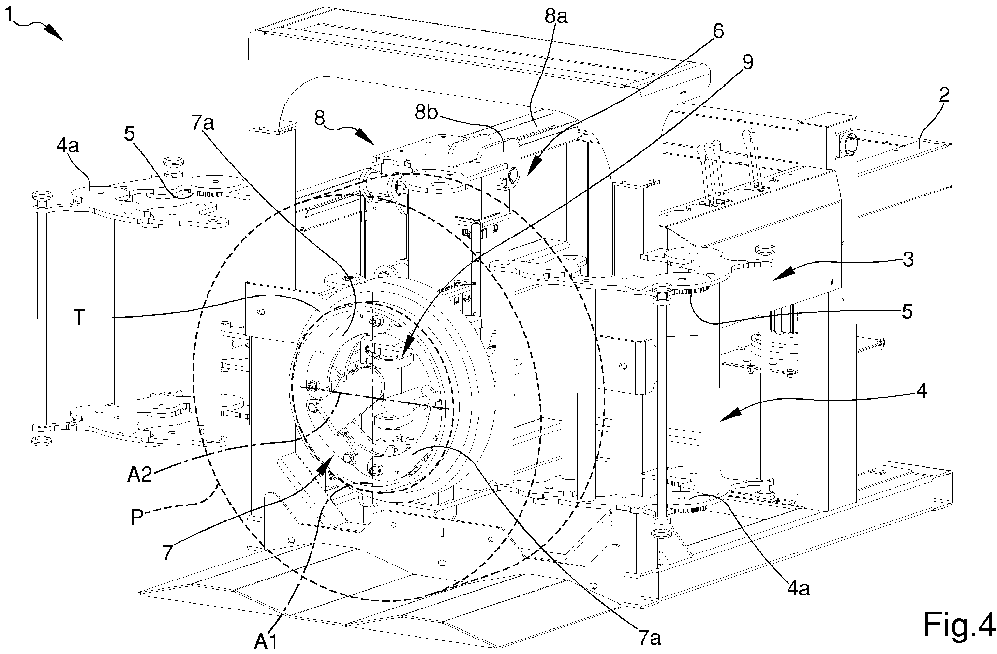

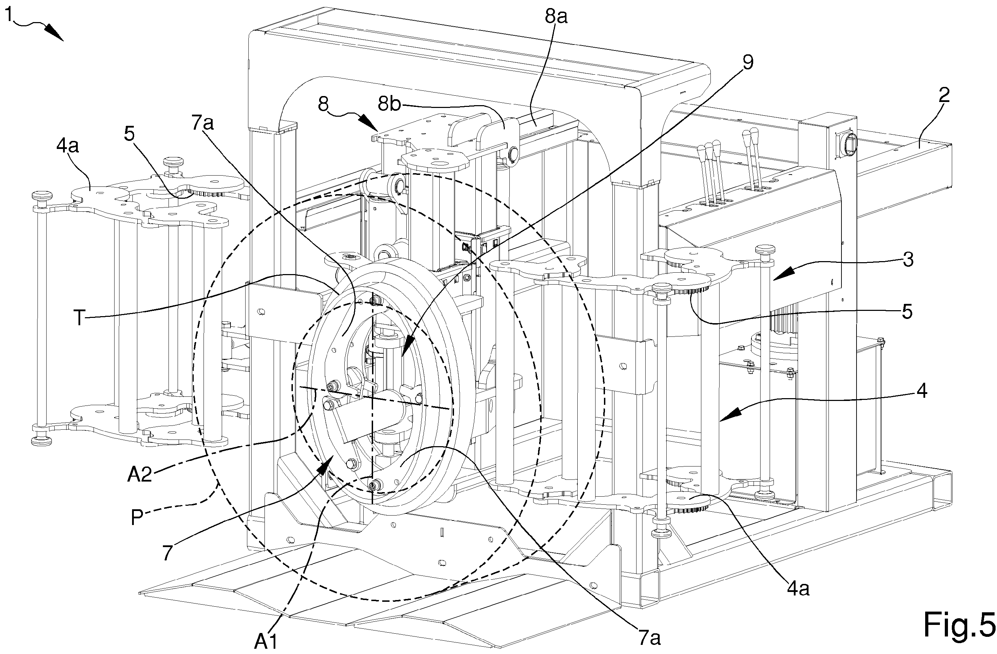

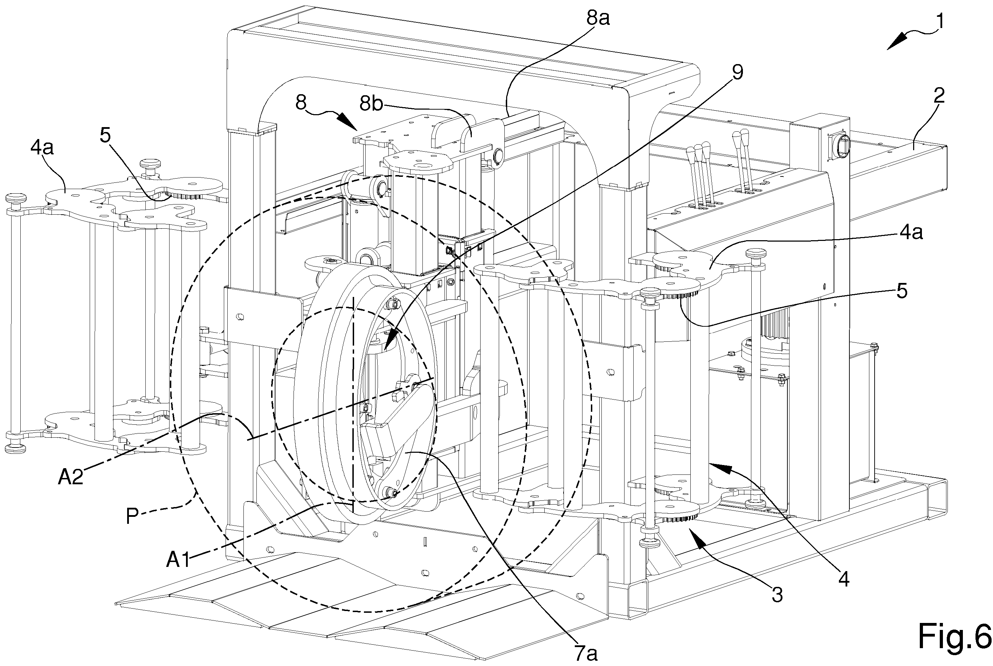

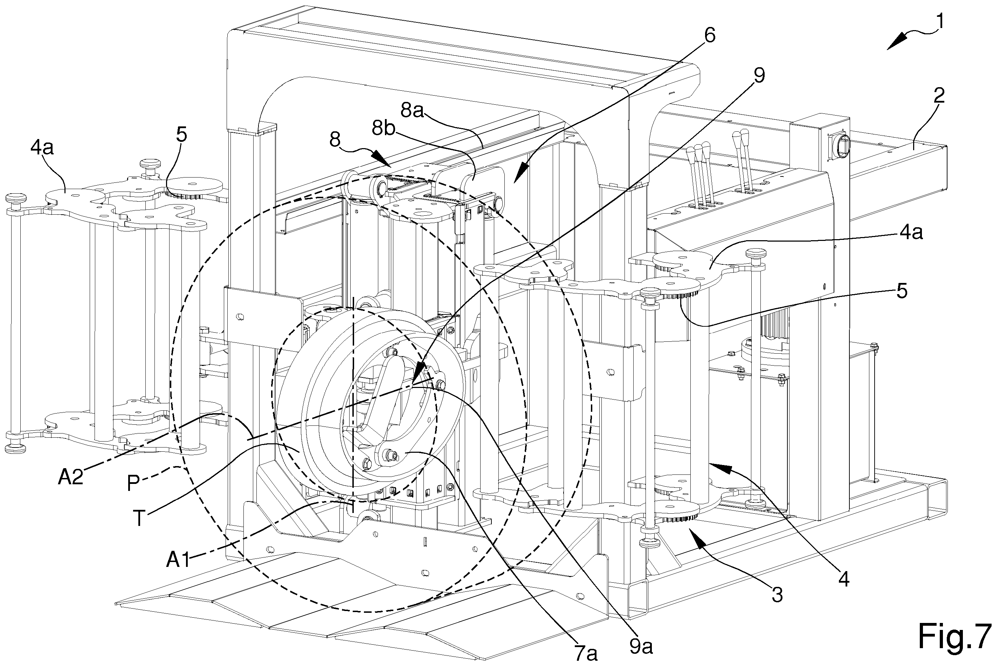

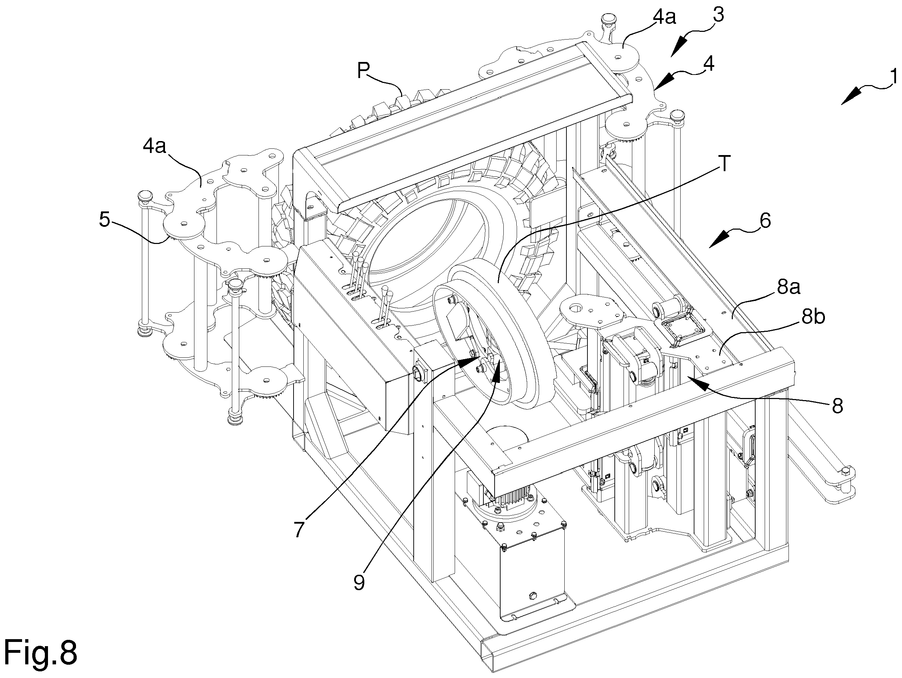

Conveniently, the insertion/removal assembly 6 is configured to be moved for the removal of the toroid T from the reinforced tire P among a plurality of operational positions comprising:
- a first position wherein the deformation means 7 are arranged in the configuration of horizontal extension and rotated to the aligned position, and wherein the close/away movement means 8 are adapted to move the deformation means 7 along the direction of close/away movement D until the deformation means 7 are fitted within the reinforced tire P (Figure 2);
- a second position wherein the deformation means 7 are arranged in the intermediate configuration (Figure 3);
- a third position wherein the deformation means 7 are rotated to the transverse position and adhere peripherally to the inner surface of the toroid (Figure 4);
- a fourth position wherein the deformation means 7 are arranged in the configuration of vertical extension. In this case, the deformation means 7 deform the toroid T to give it an ellipsoidal conformation having a major axis coincident with the first axis A1 (Figure 5);
- a fifth position wherein the deformation means 7 are rotated to the aligned position (Figure 6);
- a sixth position wherein the deformation means 7 are arranged in the configuration of horizontal extension (Figure 7). In this case, the deformation means 7 deform the toroid T to give it an ellipsoidal shape having a major axis coincident with the second axis A2. Having longitudinal development extending along the direction of close/away movement D and its extension along the first axis A1 being small, the toroid T can be easily removed from the reinforced tire P. In this regard, in the sixth position, the close/away movement means 8 are adapted to move the deformation means 7 along the direction of close/away movement D until the deformation means 7 are removed from the reinforced tire P (Figure 8).

In contrast, the procedure to insert the toroid T into the reinforced tire P begins by placing the deformation means 7 inside the toroid itself.

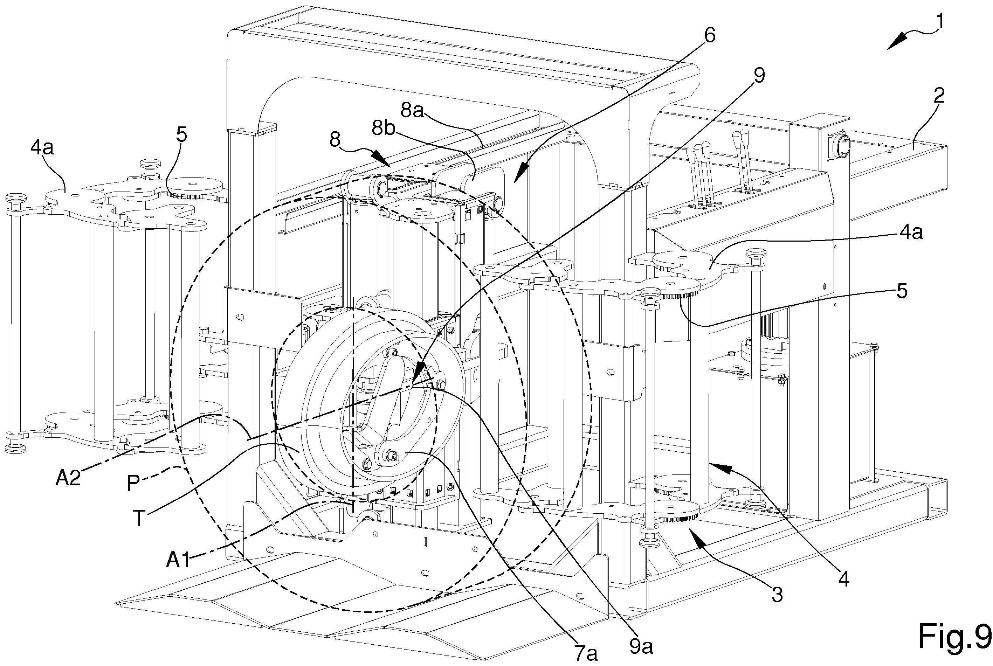

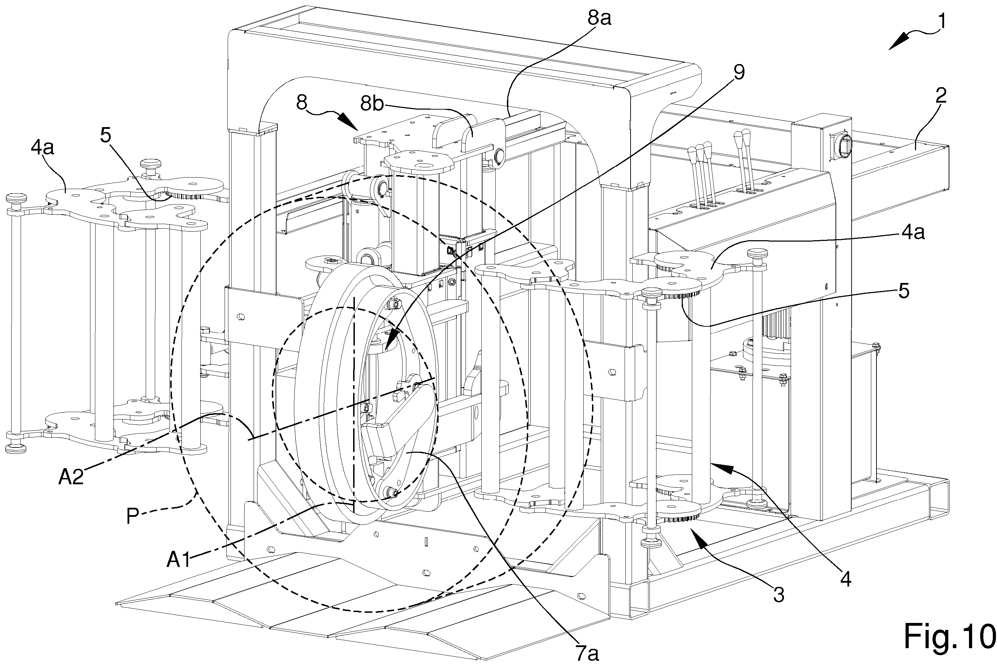

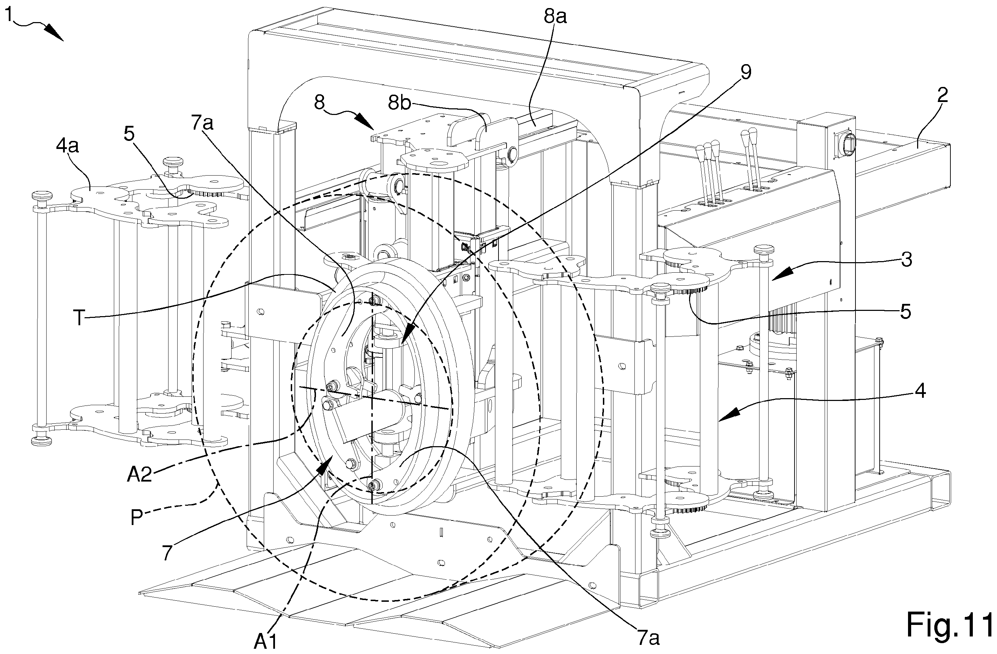

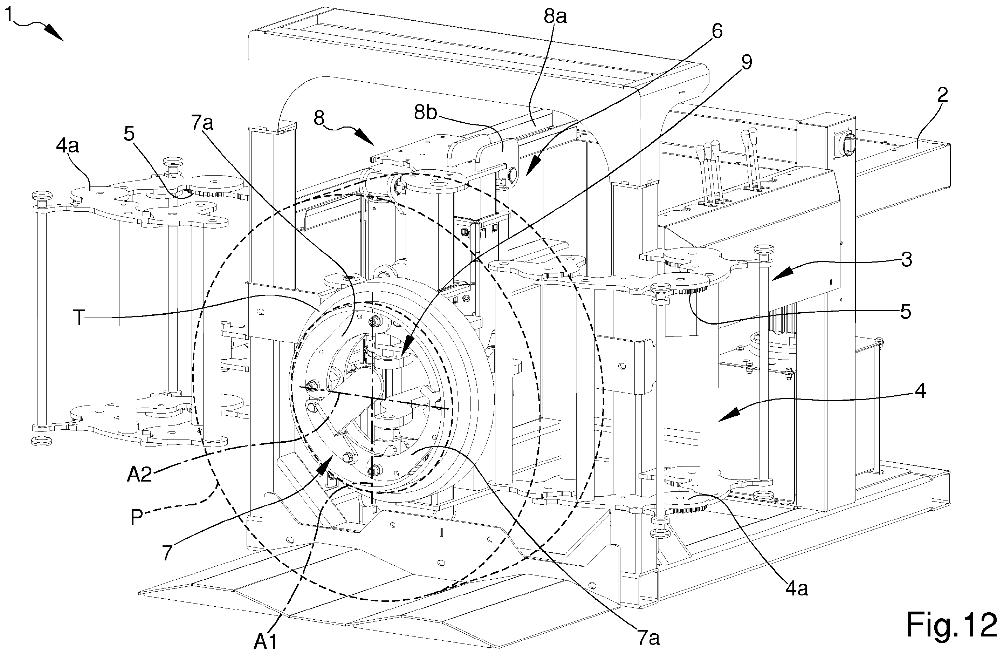

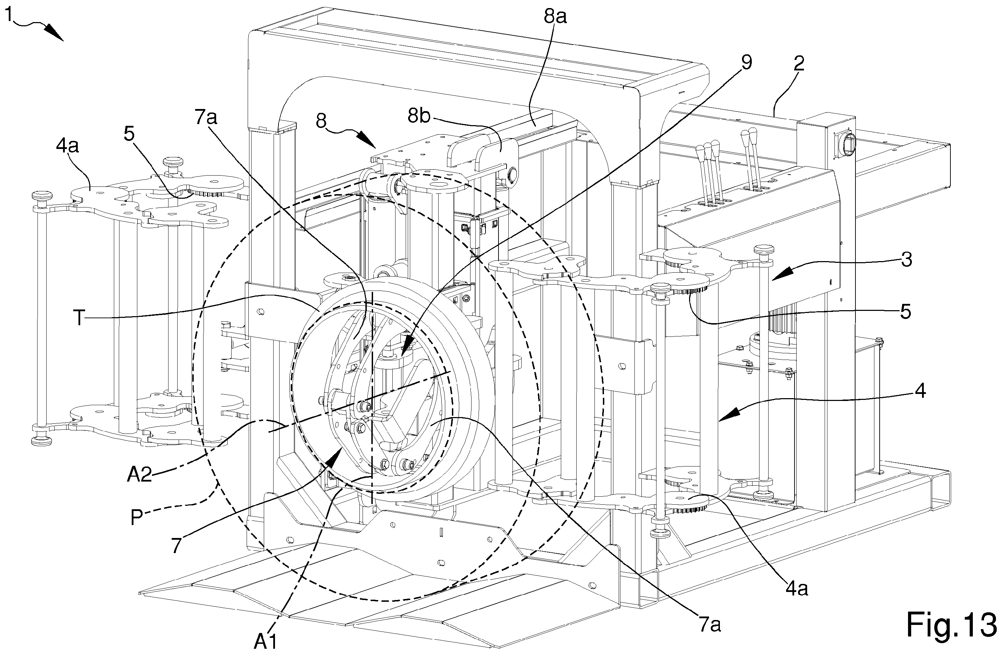

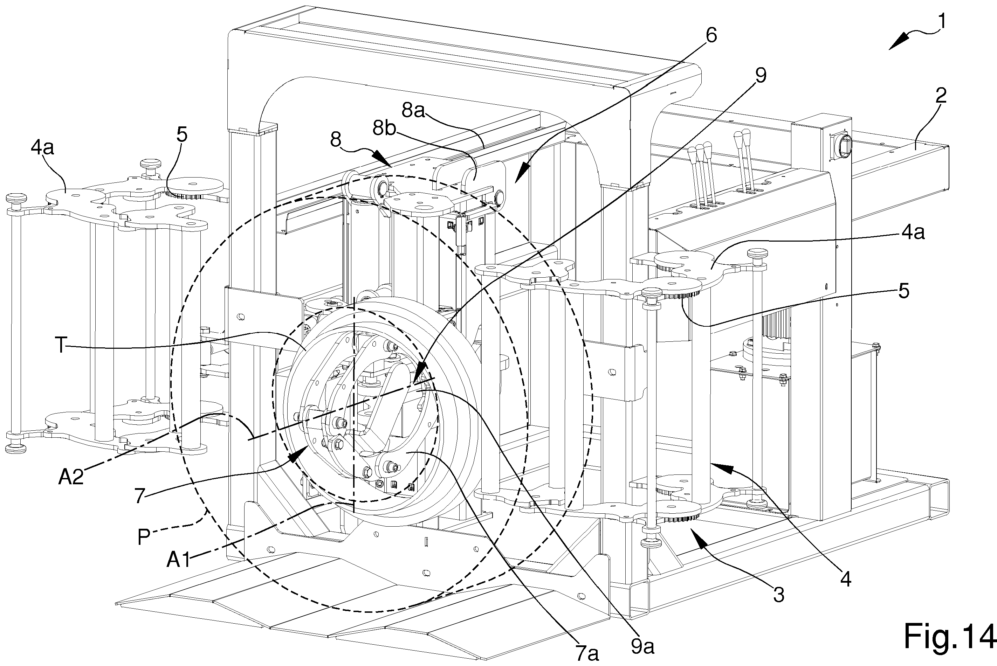

In this sense, the insertion/removal assembly 6 is configured to be moved for the insertion of the toroid T into the reinforced tire P among a plurality of operational positions comprising:
- a first position wherein the deformation means 7 are arranged in the configuration of horizontal extension and rotated to the aligned position. In the first position, the close/away movement means 8 are adapted to move the deformation means 7 along the direction of close/away movement D until the deformation means 7 and, therefore, the toroid T are inserted within the reinforced tire P (Figure 9);
- a second position wherein the deformation means 7 are arranged in the configuration of vertical extension. In this case, the deformation means 7 deform the toroid T to give it an ellipsoidal shape having a major axis coincident with the first axis A1 (Figure 10);
- a third position wherein the deformation means 7 are rotated to the transverse position (Figure 11);
- a fourth position wherein the deformation means 7 are arranged in the intermediate configuration and the toroid T is substantially concentric to the reinforced tire P (Figure 12);
- a fifth position wherein the deformation means 7 are rotated to the aligned position (Figure 13);
- a sixth position wherein the deformation means 7 are arranged in the configuration of horizontal extension. In this position, the vertical extension of the deformation means 7 is reduced and, therefore, the same can be removed from the reinforced tire P. In this sense, the close/away movement means 8 are adapted to move, in the sixth position, the deformation means 7 along the direction of close/away movement D until the deformation means 7 are removed from the reinforced tire P (Figure 14).

It is important to specify that the fact of providing deformation means 7 operable to insert/remove the toroid T according to the mode of operation just described proves to be extremely advantageous in remedying the drawbacks of the prior art previously complained of.

First of all, such deformation means 7 do not require any manual intervention by the operators while operating the machine, thus drastically increasing the overall safety compared to the mentioned state of the art.

Again, the performance by the deformation means 7 of the work phases listed above gives the machine 1 high precision, reliability and repeatability of operation, resulting in greatly reducing the time required for the insertion/removal of the toroid T into/from the reinforced tire P and, therefore, increasing the production output of the machine 1 compared with known machines.

Last but not least, the accuracy of the machine 1 also allows lower stresses to be exerted on the toroid T and on the reinforced tire P, thus averting the possibility of damage to them during the operation of the machine 1.

Having specified these advantages, it is also specified that the deformation means 7 preferably comprise a plurality of articulated arms 7a mutually connected to each other and movable with respect to each other in the transition between the configuration of vertical extension, the intermediate configuration and the configuration of horizontal extension.

Specifically, the deformation means 7 comprise four articulated arms 7a. Preferably, the articulated arms 7a are arranged in a lozenge pattern.

Different embodiments of the deformation means 7 cannot however be ruled out wherein, e.g., they comprise a different number of articulated arms 7a (e.g., eight) and/or wherein the latter are arranged differently (e.g., rectangular).

As for, however, the close/away movement means 8, they preferably comprise:
- at least one guide 8a associated with the base frame 2 and developing along the direction of close/away movement D; and
- at least one supporting body 8b associated with the guide 8a in a sliding manner and adapted to support the deformation means 7 by shifting along the direction of close/away movement D.

With reference to the procedure of removal of the toroid T from the reinforced tire P, the supporting body 8b is configured to shift along the direction of close/away movement D when the deformation means 7 are in the first position and in the sixth position.

More specifically:
- in the first position, the supporting body 8b shift, together with the deformation means 7, along a first way of the direction of close/away movement D;
- in the second position, in the third position, in the fourth position and in the fifth position, the supporting body 8b remains stationary with respect to the direction of close/away movement D; and
- in the sixth position the supporting body 8b shifts, together with the deformation means 7, along a second way of the direction of close/away movement D opposite the first way.

Similarly, with reference to the procedure of inserting the toroid T into the reinforced tire P, the supporting body 8b is configured to shift along the direction of close/away movement D when the deformation means 7 are in the first position and in the sixth position.

More specifically:
- in the first position, the supporting body 8b shifts, together with the deformation means 7, along the first way of the direction of close/away movement D;
- in the second position, in the third position, in the fourth position and in the fifth position, the supporting body 8b remains stationary with respect to the direction of close/away movement D; and
- in the sixth position, the supporting body 8b shifts, together with the deformation means 7, along the second way of the direction of close/away movement D.

Conveniently, the insertion/removal assembly 6 comprises movement means 9 associated with the deformation means 7.

Specifically, the movement means 9 are adapted to:
- arrange the deformation means 7 in one of the configuration of vertical extension, the intermediate configuration or the configuration of horizontal extension; and to
- rotate the deformation means 7 to one of either the aligned position or the transverse position.

In accordance with the preferred embodiment shown in the figures, the movement means 9 comprise at least one pair of movement arms 9a with which the deformation means 7 are associated in a rotatable manner.

In particular, the movement arms 9a are movable in mutual close/away movement along the first axis A1.

Conveniently, the movement arms 9a are associated with the supporting body 8b. More specifically, the movement arms 9a are constrained to the supporting body 8b.

This means that the shift of the supporting body 8b along the direction of close/away movement D results in the shifts along the same direction of both the deformation means 7 and the movement means 9.

Referring to the procedure of removing the toroid T from the reinforced tire P, the movement arms 9a are moved one with respect to the other in the second position, in the fourth position and in the sixth position.

Specifically, the movement arms 9a are moved away from each other in the second position (where they arrange the deformation means 7 from the configuration of horizontal extension to the intermediate configuration) and in the fourth position (where they arrange the deformation means 7 from the intermediate configuration to the configuration of vertical extension).

Instead, the movement arms 9a are moved in mutual close movement in the sixth position (where they arrange the deformation means 7 from the configuration of vertical extension to the configuration of horizontal extension).

Through this sequence of actions it is, therefore, possible to remove the toroid T from the tire P in an effective, smooth and absolutely repeatable manner.

Similarly, in the procedure of insertion of the toroid T, the movement arms 9a are also moved the one with respect to the other in the second position, in the fourth position and in the sixth position.

Specifically, the movement arms 9a are moved in mutual away movement from each other in the second position (where they arrange the deformation means 7 from the configuration of horizontal extension to the configuration of vertical extension).

Instead, the movement arms 9a are moved in mutual close movement in the fourth position (where they arrange the deformation means 7 from the configuration of vertical extension to the intermediate configuration) and in the sixth position (where they arrange the deformation means 7 from the intermediate configuration to the configuration of horizontal extension).

Through this sequence of actions it is, therefore, possible to insert the toroid T into the tire P effectively, smoothly and absolutely repeatably.

Conveniently, the insertion/removal assembly 6 comprises lifting/lowering means, not shown in the figures, that are operationally associated with the deformation means 7 and are adapted to move the latter parallel to the first axis A1.

This makes it possible to adjust the height of the deformation means 7 by lifting and lowering them according to, e.g., the size of the reinforced tire P within which they are to be inserted.

This further allows increasing the versatility of the machine 1, which can, therefore, be used to insert and remove the toroids T into/from the reinforced tires P of even very different sizes.

It has in practice been ascertained that the described invention achieves the intended objects.

In particular, the fact is highlighted that the deformation means according to the invention make it possible to obtain a machine with perfectly safe use for the operators, in which no direct intervention by the operatores is required to carry out the insertion/removal of the toroid into/from the wheels.

This same expedient, among other things, makes it possible to remove/insert the toroid from/into the wheel of a military vehicle in a particularly precise and repeatable manner.

Still, this expedient also allows reducing the time required to complete these operations compared with the aforementioned prior art, thus increasing the production output of the machine.

Finally, the special operation of the insertion/removal assembly according to the invention allows the toroid to be inserted/removed into/from the tire absolutely accurately and precisely, that is, without resulting in any damage to either the tire or the toroid itself.

## Claims

1. Machine (1) for the insertion/removal of toroids into/from wheels of special vehicles, comprising:
- at least one base frame (2) for resting on the ground;
- gripping and retaining means (3) of a reinforced tire (P) associated with said base frame (2);
- at least one insertion/removal assembly (6) of a toroid (T) into/from said reinforced tire (P);
wherein said insertion/removal assembly (6) comprises deformation means (7) of said toroid (T) and close/away movement means (8) of said deformation means (7) for moving them close to/away from said gripping and retaining means (3) along a direction of close/away movement (D), wherein said deformation means (7) are extendable/compressible along a first vertical axis (A1),
**characterized in that** said deformation means (7) are extendable/compressible along a second horizontal axis (A2) between a configuration of vertical extension, wherein they are elongated along said first axis (A1), an intermediate configuration, wherein they have a substantially circular conformation, and a configuration of horizontal extension, wherein they are elongated along said second axis (A2), and wherein said deformation means (7) are rotatable around said first axis (A1) between an aligned position, wherein said second axis (A2) is substantially parallel to said direction of close/away movement (D), and a transverse position, wherein said second axis (A2) is substantially perpendicular to said direction of close/away movement (D).

2. Machine (1) according to claim 1, **characterized by** the fact that said deformation means (7) comprise a plurality of articulated arms (7a) mutually connected to each other and movable with respect to each other in the transition between said configuration of vertical extension, said intermediate configuration and said configuration of horizontal extension.

3. Machine (1) according to claim 2, **characterized by** the fact that said articulated arms (7a) are arranged in a lozenge pattern.

4. Machine (1) according to claim 2 or 3, **characterized by** the fact that said deformation means (7) comprise four of said articulated arms (7a).

5. Machine (1) according to one or more of the preceding claims, **characterized by** the fact that said close/away movement means (8) comprise:
- at least one guide (8a) associated with said base frame (2) and developing along said direction of close/away movement (D); and
- at least one supporting body (8b) associated with said guide (8a) in a sliding manner and adapted to support said deformation means (7) by shifting along said direction of close/away movement (D).

6. Machine (1) according to one or more of the preceding claims, **characterized by** the fact that said insertion/removal assembly (6) comprises movement means (9) associated with said deformation means (7) and adapted to:
- arrange said deformation means (7) in one of said configuration of vertical extension, said intermediate configuration or said configuration of horizontal extension; and to
- rotate said deformation means (7) to one of either said aligned position or said transverse position.

7. Machine (1) according to claim 6, **characterized by** the fact that said movement means (9) comprise at least one pair of movement arms (9a) which are movable in mutual close/away movement along said first axis (A1) and with which said deformation means (7) are associated in a rotatable manner.

8. Machine (1) according to one or more of the preceding claims, **characterized by** the fact that said gripping and retaining means (3) comprise:
- at least one gripping and retaining structure (4) movable between a retaining configuration of said reinforced tire (P) and a release configuration of said reinforced tire (P); and
- at least one blocking mechanism (5) associated with said gripping and retaining structure (4) and adapted to block the latter in said retaining configuration, preventing the transition thereof to said release configuration.

9. Machine (1) according to claim 8, **characterized by** the fact that said blocking mechanism (5) is of the type of a cogwheel ratchet gear.

10. Method of using the machine (1) according one or more of the preceding claims, **characterized by** the fact that it comprises the movement of said insertion/removal assembly (6) for the removal of said toroid (T) from said reinforced tire (P) among a plurality of operational positions comprising:
- a first position wherein said deformation means (7) are arranged in said configuration of horizontal extension and rotated to said aligned position, and wherein said close/away movement means (8) are configured to move said deformation means (7) along said direction of close/away movement (D) until said deformation means (7) are fitted within said reinforced tire (P);
- a second position wherein said deformation means (7) are arranged in said intermediate configuration;
- a third position wherein said deformation means (7) are rotated to said transverse position;
- a fourth position wherein said deformation means (7) are arranged in said configuration of vertical extension;
- a fifth position wherein said deformation means (7) are rotated to said aligned position;
- a sixth position wherein said deformation means (7) are arranged in said configuration of horizontal extension and wherein said close/away movement means (8) are configured to move said deformation means (7) along said direction of close/away movement (D) until said deformation means (7) are removed from said reinforced tire (P).

11. Method of using the machine (1) according to one or more of the preceding claims 1-9, **characterized by** the fact that it comprises the movement of said insertion/removal assembly (6) for the insertion of said toroid (T) into said reinforced tire (P) among a plurality of operational positions comprising:
- a first position wherein said deformation means (7) are arranged in said configuration of horizontal extension and rotated to said aligned position, and wherein said close/away movement means (8) are configured to move said deformation means (7) along said direction of close/away movement (D) until said deformation means (7) are fitted within said reinforced tire (P);
- a second position wherein said deformation means (7) are arranged in said configuration of vertical extension;
- a third position wherein said deformation means (7) are rotated to said transverse position;
- a fourth position wherein said deformation means (7) are arranged in said intermediate configuration;
- a fifth position wherein said deformation means (7) are rotated to said aligned position;
- a sixth position wherein said deformation means (7) are arranged in said configuration of horizontal extension and wherein said close/away movement means (8) are configured to move said deformation means (7) along said direction of close/away movement (D) until said deformation means (7) are removed from said reinforced tire (P).

## Patentansprüche

1. Maschine (1) zum Einsetzen/ Entfernen von Reifenprofilringen in/ aus Reifen von Spezialfahrzeugen, umfassend:
- mindestens einen Grundrahmen (2) zur Auflage auf dem Boden;
- Mittel (3) zum Greifen und Halten eines verstärkten Reifens (P), die mit dem Grundrahmen (2) verbunden sind;
- mindestens eine Einsetz-/ Entnahmeanordnung (6) für einen Reifenprofilring (T) in den/ aus dem verstärkten Reifen (P);
wobei die Einsetz-/ Entnahmeanordnung (6) Verformungsmittel (7) für den Reifenprofilring (T) und Mittel (8) für eine Annäherungs-/ Entfernungsbewegung umfasst, um die Verformungsmittel (7) näher an oder weiter weg von den Greif- und Haltemitteln (3) entlang einer Annäherungs-/ Entfernungs-Bewegungsrichtung (D) zu bewegen, wobei die Verformungsmittel (7) entlang einer ersten vertikalen Achse (A1) ausdehnbar/ komprimierbar sind,
**dadurch gekennzeichnet, dass** die Verformungsmittel (7) entlang einer zweiten horizontalen Achse (A2) zwischen einer vertikalen Ausdehnungskonfiguration, in der sie entlang der ersten Achse (A1) verlängert sind, einer Zwischenkonfiguration, in der sie eine im Wesentlichen kreisförmige Form aufweisen, und einer horizontalen Ausdehnungskonfiguration, in der sie entlang der zweiten Achse (A2) verlängert sind, ausdehnbar/ komprimierbar sind, und wobei die Verformungsmittel (7) um die erste Achse (A1) zwischen einer ausgerichteten Position, in der die zweite Achse (A2) im Wesentlichen parallel zu der Annäherungs-/ Entfernungs-Bewegungsrichtung (D) ist, und einer Querposition drehbar sind, in der die zweite Achse (A2) im Wesentlichen senkrecht zu der Annäherungs-/ Entfernungs-Bewegungsrichtung (D) ist.

2. Maschine (1) nach Anspruch 1, **dadurch gekennzeichnet, dass** die Verformungsmittel (7) mehrere Gelenkarme (7a) umfassen, die miteinander verbunden und beim Übergang zwischen der vertikalen Ausdehnungskonfiguration, der Zwischenkonfiguration und der horizontalen Ausdehnungskonfiguration relativ zueinander bewegbar sind.

3. Maschine (1) nach Anspruch 2, **dadurch gekennzeichnet, dass** die Gelenkarme (7a) in einer Rauten-Anordnung angeordnet sind.

4. Maschine (1) nach Anspruch 2 oder 3, **dadurch gekennzeichnet, dass** die Verformungsmittel (7) vier der Gelenkarme (7a) umfassen.

5. Maschine (1) nach einem oder mehreren der vorhergehenden Ansprüche, **dadurch gekennzeichnet, dass** die Annäherungs-/ Entfernungsbewegungsmittel (8) umfassen:
- mindestens eine Führung (8a), die mit dem Grundrahmen (2) verbunden ist und sich entlang der Annäherungs-/ Entfernungs-Bewegungsrichtung (D) erstreckt; und
- mindestens einen Stützkörper (8b), der gleitend mit der Führung (8a) verbunden und ausgebildet ist, die Verformungsmittel (7) durch Verschieben entlang der Annäherungs-/ Entfernungs-Bewegungsrichtung (D) zu stützen.

6. Maschine (1) nach einem oder mehreren der vorhergehenden Ansprüche, **dadurch gekennzeichnet, dass** die Einsetz-/ Entnahmeanordnung (6) Bewegungsmittel (9) umfasst, die mit den Verformungsmitteln (7) verbunden und ausgebildet sind,
- die Verformungsmittel (7) in einer der vertikalen Ausdehnungskonfiguration, Zwischenkonfiguration oder horizontalen Ausdehnungskonfiguration anzuordnen; und
- die Verformungsmittel (7) in eine der ausgerichteten Position oder der Querposition zu drehen.

7. Maschine (1) nach Anspruch 6, **dadurch gekennzeichnet, dass** die Bewegungsmittel (9) mindestens ein Paar Bewegungsarme (9a) umfassen, die in einer gegenseitigen Annäherungs-/ Entfernungsbewegung entlang der ersten Achse (A1) bewegbar sind und mit denen die Verformungsmittel (7) drehbar verbunden sind.

8. Maschine (1) nach einem oder mehreren der vorhergehenden Ansprüche, **dadurch gekennzeichnet, dass** die Greif- und Haltemittel (3) umfassen:
- mindestens eine Greif- und Haltekonstruktion (4), die zwischen einer Haltekonfiguration des verstärkten Reifens (P) und einer Freigabekonfiguration des verstärkten Reifens (P) bewegbar ist; und
- mindestens einen Sperrmechanismus (5), der mit der Greif- und Haltekonstruktion (4) verbunden und ausgebildet ist, diese in der Haltekonfiguration zu sperren und so deren Übergang in die Freigabekonfiguration zu verhindern.

9. Maschine (1) nach Anspruch 8, **dadurch gekennzeichnet, dass** der Sperrmechanismus (5) als Zahnrad-Ratschengetriebe ausgebildet ist.

10. Verfahren zur Verwendung der Maschine (1) gemäß einem oder mehreren der vorhergehenden Ansprüche, **dadurch gekennzeichnet, dass** es die Bewegung der Einsetz-/ Entnahmeanordnung (6) zum Entfernen des Reifenprofilrings (T) aus dem verstärkten Reifen (P) zwischen mehreren Betriebspositionen umfasst, die Folgendes umfassen:
- eine erste Position, in der die Verformungsmittel (7) in der horizontalen Ausdehnungskonfiguration angeordnet und in die ausgerichtete Position gedreht sind und in der die Annäherungs-/ Entfernungsbewegungsmittel (8) ausgebildet sind, die Verformungsmittel (7) entlang der Annäherungs-/ Entfernungs-Bewegungsrichtung (D) zu bewegen, bis die Verformungsmittel (7) in den verstärkten Reifen (P) eingepasst sind;
- eine zweite Position, in der die Verformungsmittel (7) in der Zwischenkonfiguration angeordnet sind;
- eine dritte Position, in der die Verformungsmittel (7) in die Querposition gedreht sind;
- eine vierte Position, in der die Verformungsmittel (7) in der vertikalen Ausdehnungskonfiguration angeordnet sind;
- eine fünfte Position, in der die Verformungsmittel (7) in die ausgerichtete Position gedreht sind;
- eine sechste Position, in der die Verformungsmittel (7) in der horizontalen Ausdehnungskonfiguration angeordnet sind und in der die Annäherungs-/ Entfernungsbewegungsmittel (8) ausgebildet sind, die Verformungsmittel (7) entlang der Annäherungs-/ Entfernungs-Bewegungsrichtung (D) zu bewegen, bis die Verformungsmittel (7) aus dem verstärkten Reifen (P) entfernt sind.

11. Verfahren zur Verwendung der Maschine (1) gemäß einem oder mehreren der vorhergehenden Ansprüche 1 bis 9, **dadurch gekennzeichnet, dass** es die Bewegung der Einsetz-/ Entnahmeanordnung (6) zum Einsetzen des Reifenprofilrings (T) in den verstärkten Reifen (P) zwischen mehreren Betriebspositionen umfasst, die Folgendes umfassen:
- eine erste Position, in der die Verformungsmittel (7) in der horizontalen Ausdehnungskonfiguration angeordnet und in die ausgerichtete Position gedreht sind und in der die Annäherungs-/ Entfernungsbewegungsmittel (8) ausgebildet sind, die Verformungsmittel (7) entlang der Annäherungs-/ Entfernungs-Bewegungsrichtung (D) zu bewegen, bis die Verformungsmittel (7) in den verstärkten Reifen (P) eingepasst sind;
- eine zweite Position, in der die Verformungsmittel (7) in der vertikalen Ausdehnungskonfiguration angeordnet sind;
- eine dritte Position, in der die Verformungsmittel (7) in die Querposition gedreht sind;
- eine vierte Position, in der die Verformungsmittel (7) in der Zwischenkonfiguration angeordnet sind;
- eine fünfte Position, in der die Verformungsmittel (7) in die ausgerichtete Position gedreht sind;
- eine sechste Position, in der die Verformungsmittel (7) in der horizontalen Ausdehnungskonfiguration angeordnet sind und in der die Annäherungs-/ Entfernungsbewegungsmittel (8) ausgebildet sind, die Verformungsmittel (7) entlang der Annäherungs-/ Entfernungs-Bewegungsrichtung (D) zu bewegen, bis die Verformungsmittel (7) aus dem verstärkten Reifen (P) entfernt sind.

## Revendications

1. - Machine (1) pour l'introduction/le retrait de tores dans des/à partir de roues de véhicules spéciaux, comprenant :
- au moins un cadre de base (2) destiné à reposer sur le sol ;
- des moyens de préhension et de retenue (3) d'un pneu renforcé (P) associés audit cadre de base (2) ;
- au moins un ensemble d'introduction/retrait (6) d'un tore (T) dans ledit/à partir dudit pneu renforcé (P) ;
dans lequel ledit ensemble d'introduction/retrait (6) comprend des moyens de déformation (7) dudit tore (T) et des moyens de déplacement de rapprochement/éloignement (8) desdits moyens de déformation (7) pour les rapprocher/les éloigner desdits moyens de préhension et de retenue (3) le long d'une direction de mouvement de rapprochement/éloignement (D), lesdits moyens de déformation (7) étant extensibles/compressibles le long d'un premier axe vertical (A1),
**caractérisée par le fait que** lesdits moyens de déformation (7) sont extensibles/compressibles le long d'un second axe horizontal (A2) entre une configuration d'extension verticale, dans laquelle ils sont allongés le long dudit premier axe (A1), une configuration intermédiaire, dans laquelle ils ont une conformation sensiblement circulaire, et une configuration d'extension horizontale, dans laquelle ils sont allongés le long dudit second axe (A2), et dans laquelle lesdits moyens de déformation (7) sont aptes à tourner autour dudit premier axe (A1) entre une position alignée, dans laquelle ledit second axe (A2) est sensiblement parallèle à ladite direction de mouvement de rapprochement/éloignement (D), et une position transversale, dans laquelle ledit second axe (A2) est sensiblement perpendiculaire à ladite direction de mouvement de rapprochement/éloignement (D).

2. - Machine (1) selon la revendication 1, **caractérisée par le fait que** lesdits moyens de déformation (7) comprennent une pluralité de bras articulés (7a) reliés mutuellement entre eux et mobiles l'un par rapport à l'autre dans la transition entre ladite configuration d'extension verticale, ladite configuration intermédiaire et ladite configuration d'extension horizontale.

3. - Machine (1) selon la revendication 2, **caractérisée par le fait que** lesdits bras articulés (7a) sont disposés dans un motif en losange.

4. - Machine (1) selon l'une des revendications 2 ou 3, **caractérisée par le fait que** lesdits moyens de déformation (7) comprennent quatre desdits bras articulés (7a).

5. - Machine (1) selon l'une ou plusieurs des revendications précédentes, **caractérisée par le fait que** lesdits moyens de déplacement de rapprochement/éloignement (8) comprennent :
- au moins un guide (8a) associé audit cadre de base (2) et se développant le long de ladite direction de mouvement de rapprochement/éloignement (D) ; et
- au moins un corps de support (8b) associé audit guide (8a) de manière coulissante et apte à supporter lesdits moyens de déformation (7) par déplacement le long de ladite direction de rapprochement/éloignement (D).

6. - Machine (1) selon l'une ou plusieurs des revendications précédentes, **caractérisée par le fait que** ledit ensemble d'introduction/retrait (6) comprend des moyens de déplacement (9) associés auxdits moyens de déformation (7) et aptes à :
- disposer lesdits moyens de déformation (7) dans l'une de ladite configuration d'extension verticale, ladite configuration intermédiaire ou ladite configuration d'extension horizontale ; et à
- faire tourner lesdits moyens de déformation (7) dans l'une de ladite position alignée ou de ladite position transversale.

7. - Machine (1) selon la revendication 6, **caractérisée par le fait que** lesdits moyens de déplacement (9) comprennent au moins une paire de bras de déplacement (9a) qui sont mobiles en mouvement de rapprochement/éloignement mutuel le long dudit premier axe (A1) et auxquels sont associés de manière rotative lesdits moyens de déformation (7).

8. - Machine (1) selon l'une ou plusieurs des revendications précédentes, **caractérisée par le fait que** lesdits moyens de préhension et de retenue (3) comprennent :
- au moins une structure de préhension et de retenue (4) mobile entre une configuration de retenue dudit pneu renforcé (P) et une configuration de libération dudit pneu renforcé (P) ; et
- au moins un mécanisme de blocage (5) associé à ladite structure de préhension et de retenue (4) et apte à bloquer cette dernière dans ladite configuration de retenue, empêchant sa transition à ladite configuration de libération.

9. - Machine (1) selon la revendication 8, **caractérisée par le fait que** ledit mécanisme de blocage (5) est du type engrenage à cliquet de roue dentée.

10. - Procédé d'utilisation de la machine (1) selon l'une ou plusieurs des revendications précédentes, **caractérisé par le fait qu'**il comprend le déplacement dudit ensemble d'introduction/retrait (6) pour le retrait dudit tore (T) à partir dudit pneu renforcé (P) parmi une pluralité de positions opérationnelles comprenant :
- une première position dans laquelle lesdits moyens de déformation (7) sont disposés dans ladite configuration d'extension horizontale et tournés dans ladite position alignée, et dans laquelle lesdits moyens de déplacement de rapprochement/éloignement (8) sont configurés pour déplacer lesdits moyens de déformation (7) le long de ladite direction de mouvement de rapprochement/éloignement (D) jusqu'à ce que lesdits moyens de déformation (7) soient montés à l'intérieur dudit pneu renforcé (P) ;
- une deuxième position dans laquelle lesdits moyens de déformation (7) sont disposés dans ladite configuration intermédiaire ;
- une troisième position dans laquelle lesdits moyens de déformation (7) sont tournés dans ladite position transversale ;
- une quatrième position dans laquelle lesdits moyens de déformation (7) sont disposés dans ladite configuration d'extension verticale ;
- une cinquième position dans laquelle lesdits moyens de déformation (7) sont tournés dans ladite position alignée ;
- une sixième position dans laquelle lesdits moyens de déformation (7) sont disposés dans ladite configuration d'extension horizontale et dans laquelle lesdits moyens de déplacement de rapprochement/éloignement (8) sont configurés pour déplacer lesdits moyens de déformation (7) le long de ladite direction de mouvement de rapprochement/éloignement (D) jusqu'à ce que lesdits moyens de déformation (7) soient retirés dudit pneu renforcé (P).

11. - Procédé d'utilisation de la machine (1) selon l'une ou plusieurs des revendications précédentes 1 à 9, **caractérisé par le fait qu'**il comprend le déplacement dudit ensemble d'introduction/retrait (6) pour l'introduction dudit tore (T) dans ledit pneu renforcé (P) parmi une pluralité de positions opérationnelles comprenant :
- une première position dans laquelle lesdits moyens de déformation (7) sont disposés dans ladite configuration d'extension horizontale et tournés dans ladite position alignée, et dans laquelle lesdits moyens de déplacement de rapprochement/éloignement (8) sont configurés pour déplacer lesdits moyens de déformation (7) le long de ladite direction de mouvement de rapprochement/éloignement (D) jusqu'à ce que lesdits moyens de déformation (7) soient montés à l'intérieur dudit pneu renforcé (P) ;
- une deuxième position dans laquelle lesdits moyens de déformation (7) sont disposés dans ladite configuration d'extension verticale ;
- une troisième position dans laquelle lesdits moyens de déformation (7) sont tournés dans ladite position transversale ;
- une quatrième position dans laquelle lesdits moyens de déformation (7) sont disposés dans ladite configuration intermédiaire ;
- une cinquième position dans laquelle lesdits moyens de déformation (7) sont tournés dans ladite position alignée ;
- une sixième position dans laquelle lesdits moyens de déformation (7) sont disposés dans ladite configuration d'extension horizontale et dans laquelle lesdits moyens de déplacement de rapprochement/éloignement (8) sont configurés pour déplacer lesdits moyens de déformation (7) le long de ladite direction de mouvement de rapprochement/éloignement (D) jusqu'à ce que lesdits moyens de déformation (7) soient retirés dudit pneu renforcé (P).
